(19) **Europäisches Patentamt / European Patent Office / Office européen des brevets**

(11) **EP 4 576 257 A1**

(12) **EUROPEAN PATENT APPLICATION**
published in accordance with Art. 153(4) EPC

(43) Date of publication:
**25.06.2025  Bulletin 2025/26**

(21) Application number: **23865742.3**

(22) Date of filing: **17.08.2023**

(51) International Patent Classification (IPC):
$H01M\ 4/505^{(2010.01)}$     $H01M\ 4/525^{(2010.01)}$
$H01M\ 4/131^{(2010.01)}$     $H01M\ 10/0525^{(2010.01)}$
$H01M\ 4/485^{(2010.01)}$     $H01M\ 4/02^{(2006.01)}$

(52) Cooperative Patent Classification (CPC):
H01M 4/02; H01M 4/131; H01M 4/485;
H01M 4/505; H01M 4/525; H01M 10/0525;
Y02E 60/10

(86) International application number:
**PCT/KR2023/012150**

(87) International publication number:
**WO 2024/058442 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.09.2022  KR 20220116417**
               **28.09.2022  KR 20220123672**

(71) Applicant: **SK On Co., Ltd.**
**Seoul 03161 (KR)**

(72) Inventors:
• **PARK, Young Uk**
  **Daejeon 34124 (KR)**
• **KIM, Seung Hyun**
  **Daejeon 34124 (KR)**
• **LEE, Sang Han**
  **Daejeon 34124 (KR)**
• **CHO, Yong Hyun**
  **Daejeon 34124 (KR)**

(74) Representative: **Prüfer & Partner mbB**
**Patentanwälte · Rechtsanwälte**
**Sohnckestraße 12**
**81479 München (DE)**

(54) **CATHODE FOR LITHIUM SECONDARY BATTERY, AND LITHIUM SECONDARY BATTERY COMPRISING SAME**

(57) A cathode for a lithium secondary battery according to exemplary embodiments may include a cathode current collector; and a cathode active material layer formed on the cathode current collector and including over-lithiated oxide particles. A D value represented by Equation 1 of the cathode may be greater than 5.

EP 4 576 257 A1

**Description**

[Technical Field]

The present disclosure relates to a cathode for a lithium secondary battery, and a lithium secondary battery including the same. More specifically, the present disclosure relates to a cathode for a lithium secondary battery including over-lithiated oxide particles, and a lithium secondary battery including the cathode.

[Background Art]

A secondary battery is a battery which can be repeatedly charged and discharged, and has been widely applied to portable electronic devices such as a mobile phone, a laptop computer, etc. as a power source thereof.

A lithium secondary battery has a high operating voltage and a high energy density per unit weight, making it advantageous in terms of charging speed and lightweight design. In this regard, the lithium secondary battery has been actively developed and applied to various industrial fields.

The lithium secondary battery may store an electric energy by a difference in chemical potential when lithium ions are intercalated and deintercalated between a cathode and an anode. Accordingly, the lithium secondary battery may use materials capable of reversibly intercalating and deintercalating the lithium ions as a cathode active material and an anode active material.

For example, as the cathode active material, lithium metal oxide particles having a layered crystal structure of $ABO_2$ (e.g., lithium cobalt oxide ($LiCoO_2$), lithium nickel oxide ($LiNiO_2$), lithium manganese oxide ($LiMnO_2$), lithium nickel-cobalt-manganese oxide (NCM), lithium nickel-aluminum-manganese oxide (NCA), etc.) are used. The lithium metal oxide particles may realize a reversible capacity of about 100 mAh/g to 230 mAh/g.

Meanwhile, as the lithium secondary battery is applied to electric vehicles (EVs), lithium metal oxide particles having a higher capacity than the lithium metal oxide particles are being researched and developed.

The over-lithiated oxide particles are known to have a structure in which lithium is inserted into a transition metal site of lithium metal oxide particles having a layered crystal structure of $ABO_2$. Accordingly, the over-lithiated oxide particles may be expressed as $Li_aM_bO_2$ (M is a transition metal such as Mn, Ni or Co, etc., and a and b satisfy $a/b \geq 1.05$).

According to XRD analysis results for the over-lithiated oxide particles, the over-lithiated oxide particles may include $Li_2MnO_3$ domains (C2/m space group) and $LiMO_2$ domains (R3m space group, M is Mn, Ni or Co, etc.). Accordingly, the over-lithiated oxide particles may be expressed as $xLi_2MnO_3 \cdot (1-x)LiMO_2$ ($0.05 < x < 1$).

The over-lithiated oxide particles may exhibit a reversible capacity of 250 mAh/g or more by an electrochemical reaction of $Li_2MnO_3$.

For example, $Li_2MnO_3$ is electrochemically inactive, but may be converted into $LiMnO_2$ as shown in Scheme 1 below by an activation process (e.g., charging and discharging a lithium secondary battery using over-lithiated oxide particles at 4.4 V (vs $Li/Li^+$) or more). The $LiMnO_2$ may reversibly intercalate and deintercalate lithium ions as shown in Scheme 2 below. Thereby, the over-lithiated oxide particles may exhibit a high reversible capacity according to the $LiMO_2$ domains and the $Li_2MnO_3$ domains.

[Scheme 1]   (Charge) $Li_2MnO_3 \rightarrow MnO_2 + 2Li^+ + 1/2O_2 + 2e^-$ (Discharge) $MnO_2 + Li^+ + e^- \rightarrow LiMnO_2$

[Scheme 2]   (Charge) $LiMnO_2 \rightarrow MnO_2 + Li^+ + e^-$ (Discharge) $MnO_2 + Li^+ + e^- \rightarrow LiMnO_2$

However, the over-lithiated oxide particles may exhibit low operational stability (such as reduced lifespan characteristics, etc.).

[Summary of Invention]

[Problems to be Solved by Invention]

An object of the present disclosure is to provide a cathode for a lithium secondary battery having improved capacity and operational stability.

Another object of the present disclosure is to provide a lithium secondary battery having improved capacity and operational stability.

[Means for Solving Problems]

A cathode for a lithium secondary battery according to exemplary embodiments of the present disclosure may include: a cathode current collector; and a cathode active material layer formed on the cathode current collector and including over-lithiated oxide particles represented by Formula 1 below.

A D value of the cathode represented by Equation 1 below may be greater than 5.

[Formula 1] $Li_a[M_xNi_yMn_z]O_b$

In Formula 1, M is at least one of Co, Mg, V, Ti, Al, Fe, Ru, Zr, W, Sn, Nb, Mo, Cu, Zn, Cr, Ga, V and Bi, and x, y, z a and b satisfy $0 \leq x \leq 0.9$, $0 < y \leq 0.9$, $0.1 \leq z \leq 0.9$, $1.8 \leq a+x+y+z \leq 2.2$, $1.05 \leq a/(x+y+z) \leq 1.95$, $1.8 \leq b \leq 2.2$.

$$[Equation\ 1]$$

$$D = [(I_{006}/I_{003})/C] \times 100$$

In Equation 1, $I_{006}$ is an intensity of a 006 plane peak in an XRD pattern of the cathode active material layer measured after respectively performing charging and discharging twice within a voltage range of 2 V to 4.6 V in a coin half-cell including the cathode and a lithium counter electrode, $I_{003}$ is an intensity of a 003 plane peak in the XRD pattern, and C is a molar fraction of nickel relative to all metal elements excluding lithium in the cathode active material layer.

In one embodiment, D of the cathode may be 6 to 12.

In one embodiment, a ratio of $I_{006}/I_{003}$ may be 0.019 to 0.035.

In one embodiment, C may be 0.25 to 0.45.

In one embodiment, a molar fraction of manganese relative to all elements excluding lithium and oxygen in the over-lithiated oxide particles may be 0.5 to 0.75.

In one embodiment, a molar fraction of cobalt relative to all elements excluding lithium and oxygen in the over-lithiated oxide particles may be greater than 0 and 0.02 or less.

In one embodiment, the over-lithiated oxide particles may do not contain cobalt.

In one embodiment, a content of the over-lithiated oxide particles may be 80 wt% or more based on a total weight of the cathode active material layer.

A lithium secondary battery according to exemplary embodiments of the present disclosure may include: a cathode which includes a cathode current collector, and a cathode active material layer formed on the cathode current collector and including over-lithiated oxide particles represented by Formula 1 below, wherein a DA value represented by Equation 2 below is greater than 5; and an anode disposed to face the cathode:

[Formula 1] $Li_a[M_xNi_yMn_z]O_b$

In Formula 1, M is at least one of Co, Mg, V, Ti, Al, Fe, Ru, Zr, W, Sn, Nb, Mo, Cu, Zn, Cr, Ga, V and Bi, and x, y, z a and b satisfy $0 \leq x \leq 0.9$, $0 < y \leq 0.9$, $0.1 \leq z \leq 0.9$, $1.8 \leq a+x+y+z \leq 2.2$, $1.05 \leq a/(x+y+z) \leq 1.95$, $1.8 \leq b \leq 2.2$.

$$[Equation\ 2]$$

$$D_A = [(I_{006}/I_{003})/C] \times 100$$

In Equation 2, $I_{006}$ is an intensity of a 006 plane peak in an XRD pattern obtained by analyzing the cathode active material layer, $I_{003}$ is an intensity of a 003 plane peak in the XRD pattern, and C is a molar fraction of nickel relative to all metal elements excluding lithium in the cathode active material layer.

In one embodiment, an upper limit of operating voltage may be 4.5 V or less relative to an oxidation-reduction potential of lithium.

In one embodiment, the over-lithiated oxide particle may include at least one of $Li_2MnO_3$ domains and domains derived from $Li_2MnO_3$ domains.

In one embodiment, the domain derived from the $Li_2MnO_3$ domains may include at least one selected from the group consisting of $MnO_2$, $Mn_2O_4$, $LiMnO_2$, $LiMn_2O_4$ and $Li_2Mn_2O_4$.

[Advantageous effects]

The cathode for a lithium secondary battery according to exemplary embodiments of the present disclosure may exhibit a high capacity by including over-lithiated oxide particles. In addition, it may exhibit improved lifespan characteristics by satisfying Equation 1 which will be described below.

The lithium secondary battery according to exemplary embodiments of the present disclosure may exhibit improved lifespan characteristics by including the cathode. The lithium secondary battery according to some embodiments may exhibit further improved lifespan characteristics by having an upper limit of operating voltage of 4.5 V or less.

[Brief Description of Drawings]

FIG. 1 is a schematic cross-sectional view of a cathode for a lithium secondary battery according to exemplary embodiments.

FIGS. 2 and 3 are a schematic plan view and a cross-sectional views illustrating a lithium secondary battery according to exemplary embodiments, respectively.

[Mode for Carrying out Invention]

According to exemplary embodiments of the present disclosure, a cathode for a lithium secondary battery, which includes over-lithiated oxide (OLO) particles and exhibits improved capacity and lifespan characteristics, is provided.

In addition, a lithium secondary battery including the cathode is provided.

Hereinafter, the embodiments of the present disclosure will be described in detail with reference to the accompanying drawings. However, these embodiments are merely examples, and the present disclosure is not limited to the specific embodiments described as the examples.

## Cathode for a lithium secondary battery

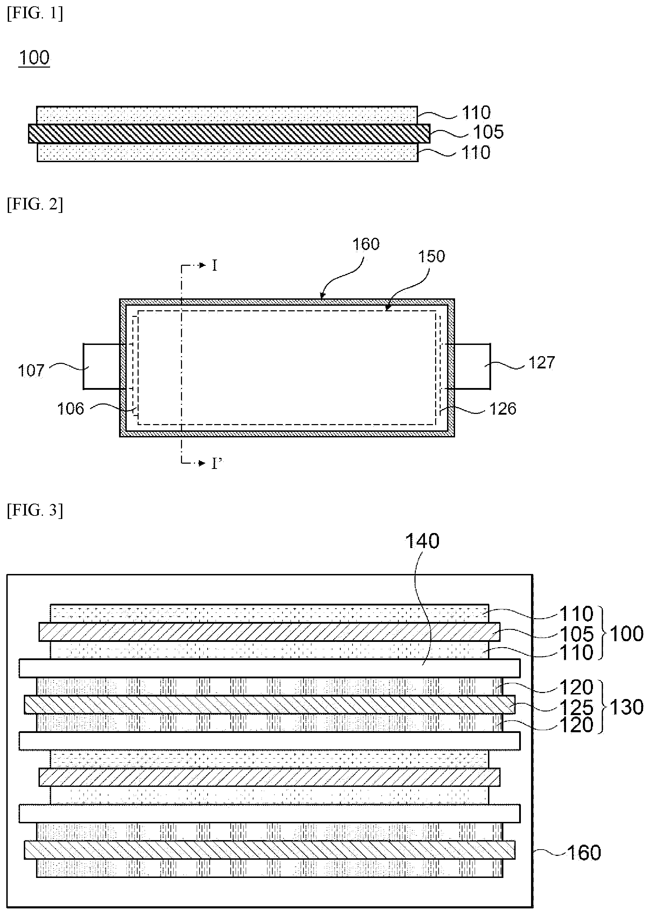

FIG. 1 is a schematic cross-sectional view illustrating a cathode for a lithium secondary battery according to exemplary embodiments.

Referring to FIG. 1, a cathode 100 for a lithium secondary battery may include a cathode current collector 105 and a cathode active material layer 110 formed on the cathode current collector 105.

For example, the cathode active material layer 110 may be formed on one surface or both surfaces of the cathode current collector 105.

For example, the cathode current collector 105 may include stainless steel, nickel, aluminum, titanium, copper, or an alloy thereof.

The cathode active material layer 110 may include cathode active material capable of reversibly intercalating and deintercalating lithium ions. For example, the cathode active material may include lithium metal oxide particles.

In exemplary embodiments, the cathode active material may include over-lithiated oxide particles.

In one embodiment, the over-lithiated oxide particles may include $Li_2MnO_3$ domains (C2/m space group) and $Li_aM_bO_c$ domains (R3m space group, wherein M is at least one of Ni Mn, Co, Mg, V, Ti, Al, Fe, Ru, Zr, W, Sn, Nb, Mo, Cu, Zn, Cr, Ga, V and Bi, and a, b and c satisfy $1.8 \leq a+b \leq 2.2$, $0.9 \leq a/b < 1.05$ and $1.9 \leq c \leq 2.1$).

In some embodiments, in the over-lithiated oxide particles, a molar ratio of the $Li_2MnO_3$ domains and the $LiMO_2$ domains may be represented as w:1-w, wherein w may be 0.05 to 0.7, or 0.1 to 0.7.

For example, the over-lithiated oxide particles may be prepared by a co-precipitation method.

For example, various types of of metal salts, a chelating agent (e.g., ammonia water, ammonium carbonate, etc.) and a co-precipitant (e.g., sodium hydroxide, sodium carbonate, etc.) may be mixed and subjected to a co-precipitation reaction to prepare metal hydroxide particles. For example, a molar ratio between the various types of metal salts may be adjusted based on a predetermined formula of the intended over-lithiated oxide particles.

For example, the over-lithiated oxide particles may be prepared by mixing the metal hydroxide particles and a lithium source so that a molar ratio of the lithium source to the number of moles of the metal hydroxide particles is 1.05 to 1.95, 1.1 to 1.95, 1.15 to 1.95 or 1.2 to 1.95, followed by calcining the same.

In one embodiment, the lithium source may include lithium hydroxide or lithium carbonate. In some embodiments, the lithium source may include lithium hydroxide.

In one embodiment, the calcination may be performed at 400 to 1100°C. For example, the calcination may be performed for 2 to 16 hours.

In some embodiments, the calcination may include a first calcination performed at 200 to 300°C and a second calcination performed at 700 to 1100°C.

For example, the over-lithiated oxide particles may be activated by applying a voltage of 4.4 V (vs Li/Li$^+$) or more (e.g., 4.4 V to 4.8 V) to the over-lithiated oxide particles (see Scheme 1-1 below). Alternatively, the over-lithiated oxide particles may be activated by charging and discharging a preliminary lithium secondary battery including the over-lithiated oxide particles at a voltage of 4.4 V (vs Li/Li$^+$) or more (see Schemes 1-1 and 1-2 below).

In one embodiment, the activated particles may include domains derived from Li$_2$MnO$_3$ domains of the over-lithiated oxide particles.

In some embodiments, the domain derived from the Li$_2$MnO$_3$ domains may include at least one of MnO$_2$, Mn$_2$O$_4$, LiMnO$_2$, LiMn$_2$O$_4$ and Li$_2$Mn$_2$O$_4$.

For example, at least some of the Li$_2$MnO$_3$ domains of the over-lithiated oxide particles may be converted into MnO$_2$ and LiMnO$_2$ by the activation as shown in Schemes 1-1 and 1-2 below. The MnO$_2$ and LiMnO$_2$ may reversibly intercalate and deintercalate lithium ions as shown in Scheme 2 below. Accordingly, the over-lithiated oxide particles may exhibit high capacity.

[Scheme 1-1]          (Charge) Li$_2$MnO$_3 \rightarrow$ MnO$_2$ + 2Li$^+$ + 1/2O$_2$ + 2e$^-$

[Scheme 1-2]          (Discharge) MnO$_2$ + Li$^+$ + e$^- \rightarrow$ LiMnO$_2$

[Scheme 2]          (Charge) LiMnO$_2 \rightarrow$ MnO$_2$ + Li$^+$ + e$^-$ (Discharge) MnO$_2$ + Li$^+$ + e$^- \rightarrow$ LiMnO$_2$

In some embodiments, the activated particles may include domains derived from the Li$_a$M$_b$O$_c$ domains, and Li$_2$MnO$_3$ domains and/or the Li$_2$MnO$_3$ domains.

In exemplary embodiments, the over-lithiated oxide particles and/or the activated particles may be represented by Formula 1 below.

[Formula 1]          Li$_a$[M$_x$Ni$_y$Mn$_z$]O$_b$

In Formula 1, M may be at least one of Co, Mg, V, Ti, Al, Fe, Ru, Zr, W, Sn, Nb, Mo, Cu, Zn, Cr, Ga, V and Bi. In addition, x, y, z a and b may satisfy $0 \le x \le 0.9$, $0 < y \le 0.9$, $0.1 \le z \le 0.9$, $1.8 \le a+x+y+z \le 2.2$, $1.05 \le a/(x+y+z) \le 1.95$ and $1.8 \le b \le 2.2$.

In some embodiments, x may be in a range of $0 < x \le 0.9$, $0.05 \le x \le 0.9$, $0.1 \le x \le 0.9$, $0 < x \le 0.8$, $0.05 \le x \le 0.8$, or $0.1 \le x \le 0.8$.

In some embodiments, y may be in a range of $0.05 \le y \le 0.9$, $0.1 \le y \le 0.9$, $0 < y \le 0.8$, $0.05 \le y \le 0.8$, or $0.1 \le y \le 0.8$.

In some embodiments, a, x, y and z may satisfy $1.1 \le a/(x+y+z) \le 1.95$, $1.15 \le a/(x+y+z) \le 1.95$, $1.2 \le a/(x+y+z) \le 1.95$, or $1.3 \le a/(x+y+z) \le 1.95$.

In some embodiments, a molar fraction of manganese relative to all elements excluding lithium and oxygen in the over-lithiated oxide particles may be 0.5 to 0.75. For example, x, y and z may satisfy $0.5 \le z/(x+y+z) \le 0.75$.

In some embodiments, x, y and z may satisfy $0.25 \le (x+y)/(x+y+z) \le 0.5$.

In some embodiments, a molar fraction of cobalt to all elements excluding lithium and oxygen in the over-lithiated oxide particles may be 0 to 0.02. In some embodiments, the over-lithiated oxide particles may not contain cobalt.

In some embodiments, b may be in a range of $1.9 \le b \le 2.1$, or $1.95 \le b \le 2.05$.

For example, compositions of the over-lithiated oxide particles and the activated particles may be confirmed by inductively coupled plasma (ICP). For example, the over-lithiated oxide particles and/or the activated particles may be analyzed by ICP, and the number of oxygen atoms may be normalized to 1.8 to 2.2 (e.g., 2), thus to obtain formulas of the over-lithiated oxide particles and/or the activated particles.

In one embodiment, the cathode active material layer 110 may further include a binder and a conductive material.

In one embodiment, the binder may include an organic binder such as polyvinylidene fluoride (PVDF), vinylidene fluoride-hexafluoropropylene copolymer, polyacrylonitrile, or polymethyl methacrylate, etc.; or an aqueous binder such as styrene-butadiene rubber (SBR). In addition, the binder may be used together with a thickener such as carboxymethyl cellulose (CMC).

In one embodiment, the conductive material may include a carbon-based conductive material such as graphite, carbon black, graphene, carbon nanotubes (CNTs), etc.; a metal-based conductive material such as tin, tin oxide, titanium oxide, or a perovskite material such as LaSrCoO$_3$, and LaSrMnO$_3$, etc.

In one embodiment, a content of the over-lithiated oxide particles, based on a total weight of the cathode active material layer 110, may be 80% by weight ("wt%") or more, 85 wt% or more, or 90 wt% or more. In some embodiments, the content of the over-lithiated oxide particles may be 98 wt% or less, or 95 wt% or less based on the total weight of the cathode active material layer 110.

Meanwhile, a lithium secondary battery using the over-lithiated oxide particles may exhibit inferior lifespan characteristics due to the unique electrochemical reaction of the Li$_2$MnO$_3$ domain among the over-lithiated oxide particles.

However, according to exemplary embodiments, the cathode 100 may have a D value greater than 5 as represented by Equation 1 below. Thereby, the lifespan characteristics of the lithium secondary battery may be improved.

[Equation 1]

$$D = (I_{006}/I_{003})/C \times 100$$

In Equation 1 above, $I_{006}$ is an intensity of a 006 plane peak in an X-ray diffraction pattern of the cathode active material layer 110 measured after respectively performing charging and discharging twice (e.g., after activation) within a voltage range of 2 V to 4.6 V in a coin half-cell including the cathode 100 and a lithium counter electrode (e.g., a coin half-cell having the configuration of Example 1), and $I_{003}$ is an intensity of a 003 plane peak in the X-ray diffraction pattern.

For example, the charging and discharging conditions may be the same as those specified in (3) of Example 1, which will be described below.

In Equation 1, C is a molar fraction of nickel relative to all metal elements excluding lithium in the cathode active material layer 100 measured after the activation. For example, C may be measured by inductively coupled plasma (ICP).

D may represent a degree of disorder of the crystal structure in the cathode active material layer 100. For example, if D exceeds 5, the probability that transition metals, that have migrated from the transition metal layer to the lithium layer during charging of the lithium secondary battery, will return to the transition metal layer during discharge of the lithium secondary battery may increase. Accordingly, the lifespan characteristics of the lithium secondary battery may be improved.

On the other hand, if D is 5 or less, transition metals that have migrated from the transition metal layer to the lithium layer during charging of the lithium secondary battery may remain in the lithium layer. Alternatively, the migrated transition metals may be eluted into the electrolyte phase. Accordingly, the lifespan characteristics of the lithium secondary battery may be deteriorated.

In one embodiment, D may be 6 or more, 6.5 or more, or 7 or more. Within the above range, the lifespan characteristics of the lithium secondary battery may be further improved.

In some embodiments, D may be 10 or less, 9 or less, or 8 or less.

In one embodiment, a ratio of $I_{006}/I_{003}$ may be 0.01 to 0.05, and in some embodiments, the ratio of $I_{006}/I_{003}$ may be 0.015 to 0.04, or 0.019 to 0.035.

In one embodiment, C may be 0.25 to 0.5, 0.25 to 0.45, 0.3 to 0.45, or 0.4 to 0.45. Within the above range, the capacity and lifespan characteristics of the lithium secondary battery may be further improved.

## **Lithium secondary battery**

FIG. 2 is a schematic plan view illustrating a lithium secondary battery according to exemplary embodiments. FIG. 3 is a schematic cross-sectional view of the lithium secondary battery taken on line I-I' of FIG. 2.

Referring to FIGS. 2 and 3, the lithium secondary battery may include an electrode assembly 150 and a case 160 in which the electrode assembly 150 is housed.

The electrode assembly 150 may include a cathode 100 and an anode 130 disposed to face the cathode 100. In one embodiment, the electrode assembly 150 may further include a separation membrane 140 interposed between the cathode 100 and the anode 130.

In one embodiment, the cathode 100 may be the above-described cathode for a lithium secondary battery.

For example, the anode 130 may include an anode current collector 125 and an anode active material layer 120 on the anode current collector 125. For example, the anode active material layer 120 may be formed on one or both surfaces of the anode current collector 125.

For example, the anode active material layer 120 may include an anode active material, the binder and the conductive material.

For example, the anode current collector 125 may include gold, stainless steel, nickel, aluminum, titanium, copper or an alloy thereof.

In one embodiment, the anode active material may be a material capable of intercalating and deintercalating lithium ions. For example, the anode active material may include a lithium alloy, a carbon-based active material, a silicon-based active material, etc.

For example, the lithium alloy may include aluminum, zinc, bismuth, cadmium, antimony, silicon, lead, tin, gallium, indium and the like.

For example, the carbon-based active material may include crystalline carbon, amorphous carbon, carbon composite, carbon fiber and the like.

For example, the amorphous carbon may include hard carbon, cokes, mesocarbon microbeads, mesophase pitch-based carbon fiber and the like.

For example, the crystalline carbon may include natural graphite, artificial graphite, graphite cokes, graphite MCMB, graphite MPCF and the like.

For example, the silicon-based active material may include Si, $SiO_x$ (0<x<2), Si/C, SiO/C, Si-Metal and the like.

In some embodiments, the anode 130 may have an area greater than that of the cathode 100.

In one embodiment, the cathode current collector 105 may include a cathode tab 106 protruding from one side of the cathode current collector 105.

For example, the cathode tab 106 may be formed integrally with the cathode current collector 105 or may be connected with the cathode current collector 105 by welding, etc. The cathode current collector 105 and the cathode lead 107 may be electrically connected with each other through the cathode tab 106.

In one embodiment, the anode current collector 125 may include an anode tab 126 protruding from one side of the anode current collector 125.

For example, the anode tab 126 may be formed integrally with the anode current collector 125, or may be electrically connected with the anode current collector 125 by welding, etc. The anode current collector 125 and the anode lead 127 may be electrically connected with each other through the anode tab 126.

For example, the separation membrane 140 may include a porous polymer film made of a polyolefin polymer such as polyethylene, polypropylene, ethylene-butene copolymer, ethylene-hexene copolymer, or ethylene-methacrylate copolymer. For example, the separation membrane 140 may include a nonwoven fabric made glass fiber having a high melting point, polyethylene terephthalate fiber or the like.

For example, the electrode assembly 150 and the electrolyte may be housed together in a pouch case 160 to form a lithium secondary battery.

In one embodiment, the electrolyte may include a lithium salt and an organic solvent.

In one embodiment, the lithium salt may include $Li^+X^-$. For example, $X^-$ may be at least one of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In one embodiment, the organic solvent may include a carbonate solvent such as ethylene carbonate (EC), propylene carbonate (PC) dimethyl carbonate (DMC), diethyl carbonate (DEC) ethyl methyl carbonate (EMC), etc.; an ester solvent such as methyl propionate, ethyl propionate, ethyl acetate, propyl acetate, butyl acetate, butyrolactone, caprolactone, valerolactone, etc.; an ether solvent such as dibutyl ether, tetraethylene glycol dimethyl ether (TEGDME), diethylene glycol dimethyl ether (DEGDME), tetrahydrofuran (THF), etc.; an alcohol solvent such as ethyl alcohol, isopropyl alcohol, etc.; a ketone solvent such as cyclohexanone, etc.; an aprotic solvent such as an amide solvent (e.g., dimethylformamide), a dioxolane solvent (e.g., 1,3-dioxolane), a sulfolane solvent, a nitrile solvent, etc.

In one embodiment, the lithium secondary battery may mean a lithium secondary battery after the activation. Accordingly, the cathode obtained after disassembling the lithium secondary battery may satisfy Equation 2 below.

[Equation 2]

$$D_A = [(I_{006}/I_{003})/C] \times 100$$

In Equation 2, $I_{006}$ is an intensity of a 006-plane peak in the XRD pattern obtained by analyzing the cathode active material layer of the lithium secondary battery, and $I_{003}$ is an intensity of a 003-plane peak in the XRD pattern. In addition, C is the molar fraction of nickel relative to all metal elements excluding lithium in the cathode active material layer of the activated lithium secondary battery.

In one embodiment, $D_A$ may be 6 or more, 6.5 or more, or 7 or more. Within the above range, the lifespan characteristics of the lithium secondary battery may be further improved.

In some embodiments, $D_A$ may be 10 or less, 9 or less, or 8 or less.

In one embodiment, an upper limit of operating voltage of the lithium secondary battery may be 4.8 V or less, 4.7 V or less, or 4.6 V or less relative to a lithium oxidation-reduction potential (i.e., a redox potential) (vs Li/Li$^+$). The "upper limit of operating voltage" refers to the upper voltage reached during actual operation of the lithium secondary battery (i.e., during real-world use), and may be distinguished from the activation voltage during an activation process in a manufacturing process of the lithium secondary battery.

In some embodiments, the upper limit of operating voltage of the lithium secondary battery may be 4.5 V or less relative to the lithium oxidation-reduction potential (vs Li/Li$^+$). In some embodiments, the upper limit of operating voltage may be 4.3 V to 4.5 V. Within the above range, the lifespan characteristics of the lithium secondary battery may be further improved.

In one embodiment, the lower limit of operating voltage of the lithium secondary battery may be 1.8 V or more, 1.9 V or more, or 2.0 V or more relative to the lithium oxidation-reduction potential (vs Li/Li$^+$). In some embodiments, the lower limit of operating voltage limit may be 1.8 V to 2.2 V.

In some embodiments, the operating voltage range (i.e., the operating voltage range) of the lithium secondary battery may be 2 V (vs $Li/Li^+$) to 4.5 V (vs $Li/Li^+$).

Hereinafter, embodiments of the present invention will be further described with reference to specific experimental examples. However, the following examples and comparative examples included in the experimental examples are only given for illustrating the present invention and those skilled in the art will obviously understand that various alterations and modifications are possible within the scope and spirit of the present invention. Such alterations and modifications are duly included in the appended claims.

### Example 1

#### (1) Preparation of over-lithiated oxide particles

Distilled water from which dissolved oxygen was removed was input into a sealed reactor, then $NiSO_4 \cdot 6H_2O$ and $MnSO_4 \cdot H_2O$ were additionally input at a molar ratio of 41:59.

NaOH (precipitant) and $NH_4OH$ (chelating agent) were additionally input into the reactor, then a co-precipitation reaction was performed for 60 hours, thus to prepare metal hydroxide particles.

The metal hydroxide particles were dried at 100°C for 12 hours.

The metal hydroxide particles and lithium hydroxide were input into a dry mixer to prepare a mixture.

A mixing ratio of the metal hydroxide particles and lithium hydroxide was adjusted so that the prepared lithium metal oxide particles satisfied the compositions according to the following ICP analysis.

The mixture was loaded into a calcination furnace, and the temperature of the calcination furnace was increased to 250°C at a rate of 2°C/min, then a first calcination was performed while maintaining the temperature at 250°C for 4 hours.

After the first calcination, the temperature of the calcination furnace was increased to 850°C at a rate of 2°C/min, and a second calcination was performed while maintaining the temperature at 850°C for 8 hours.

During the first and second calcinations, oxygen gas was continuously passed through the calcination furnace at a flow rate of 10 mL/min.

After complementation of the calcination, the calcined product was naturally cooled to room temperature, followed by pulverization and classification to prepare over-lithiated oxide particles.

As a result of analyzing the over-lithiated oxide particles by ICP (normalizing the number of oxygen atoms to 2), they were confirmed as $Li_{1.09}Ni_{0.38}Mn_{0.54}O_2$.

#### (2) Manufacture of preliminary lithium secondary battery (half-coin cell)

The over-lithiated oxide particles, carbon black, and PVDF were mixed in a mass ratio of 92:5:3, and then the mixture was dispersed in N-methyl-2-pyrrolidone (NMP) to prepare a cathode slurry.

The cathode slurry was applied to an aluminum foil, followed by drying and pressing the same, to prepare a cathode. Lithium metal was used as a counter electrode (anode).

The cathode and anode were laminated by notching them into circular shapes having a diameter of $\Phi 14$ and $\Phi 16$, respectively, and a separation membrane (PE, thickness 13 $\mu$m) notched into $\Phi 19$ was interposed between the cathode and the anode to form an electrode assembly.

The electrode assembly was placed in a coin cell case (2016 standard), and an electrolyte was injected into the coin cell case to manufacture a preliminary lithium secondary battery.

The electrolyte used herein was prepared by dissolving 1M $LiPF_6$ solution in a mixed solvent of EC/EMC (30/70, v/v).

#### (3) Manufacture of lithium secondary battery (Activation stage of preliminary lithium secondary battery)

The preliminary lithium secondary battery was subjected to CC/CV charging (0.1C constant current, CC section CUT-OFF condition: 4.6V, CV section CUT-OFF condition: 0.05C) and CC discharging (0.1 C constant current, 2.0 V CUT-OFF) at 25°C.

The charging and discharging cycles were repeatedly performed twice to activate the over-lithiated oxide particles.

### Example 2

The molar ratio of $NiSO_4 \cdot 6H_2O$ and $MnSO_4 \cdot H_2O$ was adjusted to 27.5:72.5 to prepare over-lithiated oxide particles having a composition of $Li_{1.19}Ni_{0.22}Mn_{0.59}O_2$. Aside from this, a lithium secondary battery was manufactured in the same manner as described in Example 1.

**Comparative Example 1**

Over-lithiated oxide particles were prepared by using lithium carbonate as a lithium source, and performing only the second calcination for 11 hours without conducting the first calcination.

Aside from this, a lithium secondary battery was manufactured in the same manner as described in Example 1.

**Comparative Example 2**

The molar ratio of $NiSO_4 \cdot 6H_2O$ and $MnSO_4 \cdot H_2O$ was adjusted to 38.1:61.9, and lithium carbonate was used as a lithium source. Over-lithiated oxide particles having a composition of $Li_{1.11}Ni_{0.34}Mn_{0.55}O_2$ were prepared by performing only the second calcination at 1000°C for 11 hours without conducting the first calcination.

Aside from this, a lithium secondary battery was manufactured in the same manner as described in Example 1.

**Comparative Example 3**

$NiSO_4 \cdot 6H_2O$, $MnSO_4 \cdot H_2O$ and $CoSO_4 \cdot 7H_2O$ were used in a molar ratio of 26.0:71.6:2.4, and lithium carbonate was used as a lithium source. Over-lithiated oxide particles having a composition of $Li_{1.19}Ni_{0.21}Co_{0.02}Mn_{0.58}O_2$ were prepared by performing only the second calcination at 1000°C for 11 hours without conducting the first calcination.

**Evaluation Example 1: Evaluation of initial characteristics**

**(1) ICP Analysis**

The lithium secondary batteries of the examples and comparative examples were disassembled to obtain cathodes, and then the cathode active material layer was completely scraped off from the cathodes to prepare samples.

The components of the sample were analyzed by inductively coupled plasma (ICP), then the molar fraction C of Ni relative to all metal elements (i.e., Ni and Mn, or Ni, Co and Mn) excluding lithium in the sample was calculated.

**(2) XRD analysis**

The lithium secondary batteries of the examples and comparative examples were disassembled to obtain cathodes, and then the cathode active material layer was analyzed using X-ray diffraction (XRD).

XRD analysis equipment and conditions are as described in Table 1 below.

[TABLE 1]

| X-Ray Diffractometer (XRD) EMPYREAN | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10 - 120° |
| Scan Step Size | 0.006565° |
| Divergence slit | 1/4° |
| Antiscatter slit | 1° |

From the obtained XRD pattern, the intensity of the 006 plane peak (observed at $2\theta$ 36° to 38°) and the intensity of the 003 plane peak (observed at $2\theta$ 17° to 19°) were calculated.

**(3) Calculation of degree of disorder (D) in the crystal structure**

The values of C, $I_{006}$ and $I_{003}$ calculated in (1) and (2) of the Evaluation Example 1 were substituted into Equation

9

1 below to calculate the value of D.

$$[\text{Equation 1}]$$

$$D = [I_{(006)}/I_{(003)}]/C \times 100$$

## Evaluation Example 2: Evaluation of lifespan characteristics

Lithium secondary batteries of the examples and comparative examples were subjected to CC/CV charging (1C constant current, 4.5 V and 0.05C CUT-OFF) and CC discharging (1C constant current, 2.0 V CUT-OFF) at 45°C.

The charging and discharging were repeated 100 times, and the discharge capacity $DC_2$ at the 2nd cycle and the discharge capacity $DC_{100}$ at the 100th cycle were measured.

The capacity retention rate was calculated according to the following equation.

$$\text{Capacity retention rate (\%)} = DC_{100}/DC_2 \times 100 \ (\%)$$

[TABLE 2]

|  | Initial performance | | | Life characteristics (45°C, 100th cycle) |
|---|---|---|---|---|
|  | C | $I_{006}/I_{003}$ | D | Capacity retention rate (%) |
| Example 1 | 0.411 | 0.031 | 7.5 | 92.2 |
| Example 2 | 0.275 | 0.019 | 6.9 | 90.0 |
| Comparative Example 1 | 0.411 | 0.018 | 4.4 | 35.4 |
| Comparative Example 2 | 0.381 | 0.018 | 4.8 | 27.3 |
| Comparative Example 3 | 0.260 | 0.011 | 4.1 | 23.7 |

Referring to Table 2 above, the lithium secondary batteries of the examples exhibited improved lifespan characteristics compared to the lithium secondary batteries of the comparative examples.

The contents described above are merely examples of applying the principles of the present disclosure, and other configurations may be further included without departing from the scope of the present invention.

## Claims

1. A cathode for a lithium secondary battery comprising:

    a cathode current collector; and
    a cathode active material layer formed on the cathode current collector and including over-lithiated oxide particles represented by Formula 1 below,
    wherein a D value represented by Equation 1 below is greater than 5:

    [Formula 1]        $Li_a[M_xNi_yMn_z]O_b$

    (in Formula 1, M is at least one of Co, Mg, V, Ti, Al, Fe, Ru, Zr, W, Sn, Nb, Mo, Cu, Zn, Cr, Ga, V and Bi, and x, y, z a and b satisfy $0 \leq x \leq 0.9$, $0 < y \leq 0.9$, $0.1 \leq z \leq 0.9$, $1.8 \leq a+x+y+z \leq 2.2$, $1.05 \leq a/(x+y+z) \leq 1.95$, $1.8 \leq b \leq 2.2$),

    $$[\text{Equation 1}]$$

    $$D = [(I_{006}/I_{003})/C] \times 100$$

    (in Equation 1, $I_{006}$ is an intensity of a 006 plane peak in an XRD pattern of the cathode active material layer measured after respectively performing charging and discharging twice within a voltage range of 2 V to 4.6 V in a coin half-cell including the cathode and a lithium counter electrode, $I_{003}$ is an intensity of a 003 plane peak in the XRD pattern, and C is a molar fraction of nickel relative to all metal elements excluding lithium in the cathode active material layer).

2. The cathode for a lithium secondary battery according to claim 1, wherein D is 6 to 12.

3. The cathode for a lithium secondary battery according to claim 1, wherein a ratio of $I_{006}/I_{003}$ is 0.019 to 0.035.

4. The cathode for a lithium secondary battery according to claim 1, wherein C is 0.25 to 0.45.

5. The cathode for a lithium secondary battery according to claim 1, wherein a molar fraction of manganese relative to all elements excluding lithium and oxygen in the over-lithiated oxide particles is 0.5 to 0.75.

6. The cathode for a lithium secondary battery according to claim 1, wherein a molar fraction of cobalt relative to all elements excluding lithium and oxygen in the over-lithiated oxide particles is greater than 0 and 0.02 or less.

7. The cathode for a lithium secondary battery according to claim 1, wherein the over-lithiated oxide particles do not contain cobalt.

8. The cathode for a lithium secondary battery according to claim 1, wherein a content of the over-lithiated oxide particles is 80 wt% or more based on a total weight of the cathode active material layer.

9. A lithium secondary battery comprising: a cathode which comprises a cathode current collector, and a cathode active material layer formed on the cathode current collector and including over-lithiated oxide particles represented by Formula 1 below, wherein a DA value represented by Equation 2 below is greater than 5; and an anode disposed to face the cathode:

$$Li_a[M_xNi_yMn_z]O_b \qquad \text{[Formula 1]}$$

(in Formula 1, M is at least one of Co, Mg, V, Ti, Al, Fe, Ru, Zr, W, Sn, Nb, Mo, Cu, Zn, Cr, Ga, V and Bi, and x, y, z a and b satisfy $0 \leq x \leq 0.9$, $0 < y \leq 0.9$, $0.1 \leq z \leq 0.9$, $1.8 \leq a+x+y+z \leq 2.2$, $1.05 \leq a/(x+y+z) \leq 1.95$, $1.8 \leq b \leq 2.2$),

$$\text{[Equation 2]}$$

$$D_A = [(I_{006}/I_{003})/C] \times 100$$

(in Equation 2, $I_{006}$ is an intensity of a 006 plane peak in an XRD pattern obtained by analyzing the cathode active material layer, $I_{003}$ is an intensity of a 003 plane peak in the XRD pattern, and C is a molar fraction of nickel relative to all metal elements excluding lithium in the cathode active material layer).

10. The lithium secondary battery according to claim 9, wherein an upper limit of operating voltage is 4.5 V or less relative to an oxidation-reduction potential of lithium.

11. The lithium secondary battery according to claim 9, the over-lithiated oxide particle comprises at least one of $Li_2MnO_3$ domains and domains derived from $Li_2MnO_3$ domains.

12. The lithium secondary battery according to claim 11, wherein the domain derived from the $Li_2MnO_3$ domains comprises at least one selected from the group consisting of $MnO_2$, $Mn_2O_4$, $LiMnO_2$, $LiMn_2O_4$ and $Li_2Mn_2O_4$.

[FIG. 1]

100

110
105
110

[FIG. 2]

160
150
I
107
127
106
126
I'

[FIG. 3]

140

110
105 } 100
110

120
125 } 130
120

160

## INTERNATIONAL SEARCH REPORT

| | International application No. |
|---|---|
| | **PCT/KR2023/012150** |

| A. | CLASSIFICATION OF SUBJECT MATTER |
|---|---|

**H01M 4/505**(2010.01)i; **H01M 4/525**(2010.01)i; **H01M 4/131**(2010.01)i; **H01M 10/0525**(2010.01)i; **H01M 4/485**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/505(2010.01); C01G 53/00(2006.01); H01M 10/052(2010.01); H01M 10/0525(2010.01); H01M 4/13(2010.01); H01M 4/36(2006.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 양극 활물질(cathode active material), 양극 집전체(cathode current collector), 양극(cathode), 리튬 과잉 산화물(overlithiated oxide), 니켈(nickel), 망간 (manganese)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2018-505521 A (QUANTUMSCAPE CORPORATION) 22 February 2018 (2018-02-22)<br>See abstract; claims 1 and 58; and paragraphs [0042]-[0043]. | 1-12 |
| A | CN 111900343 A (ZHUHAI COSMX BATTERY CO., LTD.) 06 November 2020 (2020-11-06)<br>See entire document. | 1-12 |
| A | US 2020-0203717 A1 (L&F CO., LTD.) 25 June 2020 (2020-06-25)<br>See entire document. | 1-12 |
| A | KR 10-2293034 B1 (SK INNOVATION CO., LTD.) 24 August 2021 (2021-08-24)<br>See entire document. | 1-12 |
| A | JP 6089701 B2 (ASAHI GLASS CO., LTD.) 08 March 2017 (2017-03-08)<br>See entire document. | 1-12 |

✓ Further documents are listed in the continuation of Box C.     ✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 November 2023** | **24 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2023/012150** |

### C.   DOCUMENTS CONSIDERED TO BE RELEVANT

| Category* | Citation of document, with indication, where appropriate, of the relevant passages | Relevant to claim No. |
|---|---|---|
| A | WANG, Z. et al. Enhanced Electrochemical Performances of Ni-rich Cathode Materials for Lithium Ion Batteries by Mixed Coating Layers. Electrochemistry. 2021, vol. 89, no. 5, pp. 461-466.<br>See entire document. | 1-12 |

Form PCT/ISA/210 (second sheet) (July 2022)

**INTERNATIONAL SEARCH REPORT**
Information on patent family members

International application No.

**PCT/KR2023/012150**

| Patent document cited in search report | | | Publication date (day/month/year) | Patent family member(s) | | | Publication date (day/month/year) |
|---|---|---|---|---|---|---|---|
| JP | 2018-505521 | A | 22 February 2018 | CN | 107210419 | A | 26 September 2017 |
| | | | | CN | 107210419 | B | 08 June 2021 |
| | | | | CN | 113394392 | A | 14 September 2021 |
| | | | | EP | 3238290 | A1 | 01 November 2017 |
| | | | | EP | 3238290 | A4 | 27 June 2018 |
| | | | | KR | 10-2017-0100534 | A | 04 September 2017 |
| | | | | US | 10199649 | B2 | 05 February 2019 |
| | | | | US | 2016-0211517 | A1 | 21 July 2016 |
| | | | | WO | 2016-106321 | A1 | 30 June 2016 |
| CN | 111900343 | A | 06 November 2020 | CN | 111900343 | B | 13 May 2022 |
| US | 2020-0203717 | A1 | 25 June 2020 | KR | 10-1826612 | B1 | 07 February 2018 |
| | | | | US | 11495791 | B2 | 08 November 2022 |
| | | | | WO | 2018-225912 | A1 | 13 December 2018 |
| KR | 10-2293034 | B1 | 24 August 2021 | CN | 113363439 | A | 07 September 2021 |
| | | | | CN | 113363439 | B | 09 August 2022 |
| | | | | CN | 115275135 | A | 01 November 2022 |
| | | | | EP | 3919445 | A1 | 08 December 2021 |
| | | | | EP | 3919445 | A4 | 08 December 2021 |
| | | | | US | 2021-0384505 | A1 | 09 December 2021 |
| JP | 6089701 | B2 | 08 March 2017 | JP | 2014-130782 | A | 10 July 2014 |

Form PCT/ISA/210 (patent family annex) (July 2022)